Europäisches Patentamt

European Patent Office

Office européen des brevets

(19)

(11) EP 0 615 099 B1

(12) **FASCICULE DE BREVET EUROPEEN**

(45) Date de publication et mention
de la délivrance du brevet:
**20.11.1996 Bulletin 1996/47**

(51) Int Cl.⁶: **F24D 19/10**, G05D 7/01,
F04D 15/00

(21) Numéro de dépôt: **94400216.1**

(22) Date de dépôt: **02.02.1994**

(54) **Réseau de distribution de fluide à dispositif de régulation**

Flüssigkeits-Verteilnetz mit Regler

Fluid distribution network with controller

(84) Etats contractants désignés:
**AT BE DE DK ES GB GR IT LU NL PT SE**

(30) Priorité: **05.02.1993 FR 9301288**

(43) Date de publication de la demande:
**14.09.1994 Bulletin 1994/37**

(73) Titulaire: **COMAP**
**F-69008 Lyon (FR)**

(72) Inventeur: **Roux, Christian**
**F-94370 Sucy en Brie (FR)**

(74) Mandataire: **Maureau, Philippe et al**
**Cabinet GERMAIN & MAUREAU**
**BP 3011**
**69392 Lyon Cédex 03 (FR)**

(56) Documents cités:
**EP-A- 0 027 827**          **WO-A-92/18921**
**DE-A- 1 753 239**          **DE-A- 2 154 870**
**DE-C- 819 322**            **US-A- 5 133 646**

- **CFP CHAUD FROID PLOMBERIE, vol.41, no.486,
Novembre 1987, PARIS FR pages 169 - 179 'LA
STABILISATION DE PRESSION DANS LES
RESEAUX HYDRAULIQUES A DEBIT VARIABLE'**

**Description**

L'invention concerne les réseaux de distribution de fluide, et plus particulièrement ceux dans lesquels la circulation du fluide doit être régulée, notamment les réseaux comprenant une source telle qu'un appareil pour amener la température du fluide à un niveau souhaité, par exemple une chaudière, et, en aval, des circuits comprenant des appareils convecteurs de fluide tels que des appareils d'échange calorifique avec l'extérieur, par exemple des émetteurs de chaleur tels que des radiateurs, équipés d'organes de commande individuelle manuelle ou automatique du débit tels que des robinets.

Dans ces réseaux, en l'absence de régulation, la manoeuvre des organes de commande individuelle ne serait-ce que d'un seul circuit entraîne des variations de débit ou/et de pression dans les parties aval et amont du réseau et plus particulièrement dans les autres circuits, et ainsi, dans le cas des réseaux de climatisation par exemple, d'une part la température du fluide qui parcourt les appareils d'échange calorifique n'est pas constante, et d'autre part la durée du transit du fluide dans ces appareils est également variable ; il en résulte une irrégularité des échanges calorifiques, et, dans le cas des réseaux de climatisation, une impossibilité de maintenir dans un local, une température constante quel que soit le nombre des appareils d'échange calorifique en fonctionnement dans les autres locaux.

On a tenté de remédier à cet inconvénient le plus souvent en intercalant dans chaque circuit, par exemple en amont de chaque convecteur de fluide, un dispositif destiné à réguler le débit dans ce circuit quelle que soit la pression, de façon à rendre, pour chaque circuit, le débit indépendant du débit dans les autres. On a également visé le même but en agissant sur les pressions.

Cependant ces dispositifs sont généralement très complexes, et surtout nécessitent d'une part l'utilisation d'un grand nombre de composants et d'autre part une multiplicité de réglages. Dans tous les cas, il en résulte des coûts d'achat, d'installation, de maintenance, et de dépannage, élevés.

L'invention a pour but de remédier aux inconvénients rencontrés dans les réseaux de distribution de fluide régulés par les dispositifs connus, et concerne à cet effet un réseau selon les caractéristiques de la première partie de la revendication 1 (voir DE-A- 21 54 870) en combinaison avec les caractéristiques selon la seconde partie de la revendication 1.

Malgré la présence d'un conduit monté en bipasse entre la conduite d'amenée et la conduite de retour de fluide, il n'est nul besoin de surdimensionner le réseau et en particulier la chaudière, puisque ceux-ci doivent de toute manière pouvoir faire face à une demande de débit égale à la somme des débits nominaux dans chaque circuit, et dans ce cas le conduit en dérivation est obturé. Il est possible que l'homme du métier ait jusqu'ici été détourné de la solution de l'invention notamment par le fait que dans celle-ci, la diminution du débit dans un circuit d'utilisation n'entraîne pas une diminution correspondante de la demande de fluide à la source, ce qui est considéré comme un inconvénient et une perte ; cependant, ce raisonnement est erroné parce que le passage dans le conduit en dérivation, du fluide non utilisé, ne correspond ni à une perte de fluide, ni à une perte d'énergie sensible, puisque ce fluide, non utilisé, n'a subi qu'une faible variation de température, et ainsi n'oblige pas la source à fournir un surcroît sensible d'énergie.

D'autres avantages de l'invention ressortiront de la description qui va suivre de formes de réalisation préférentielles données à titre d'exemples non limitatifs et illustrées par les dessins ci-joints dans lesquels :

- la figure 1 est une représentation schématique d'un circuit de distribution de fluide selon l'invention,
- les figures 2, 3 et 4 sont des courbes illustrant le fonctionnement du circuit de la figure 1,
- la figure 5 est une représentation schématique d'une partie d'une deuxième forme de réalisation d'un circuit selon l'invention.

Afin de remédier aux inconvénients des réseaux de distribution de fluide connus, il a été projeté de les réguler globalement et non au niveau de chaque circuit d'utilisation, à la fois en débit et en pression, au moyen d'un ensemble de régulation muni d'un obturateur actionné d'une part en fonction d'un débit et d'autre part en fonction d'une différence de pression.

A cette fin, dans une première forme de réalisation, l'invention vise à créer une force représentative du débit amont, et une force représentative de la différence de pression aux bornes de l'utilisation (groupe de circuits aval), et à appliquer ces forces de manière appropriée à l'obturateur de l'ensemble de régulation mentionné ci-dessus.

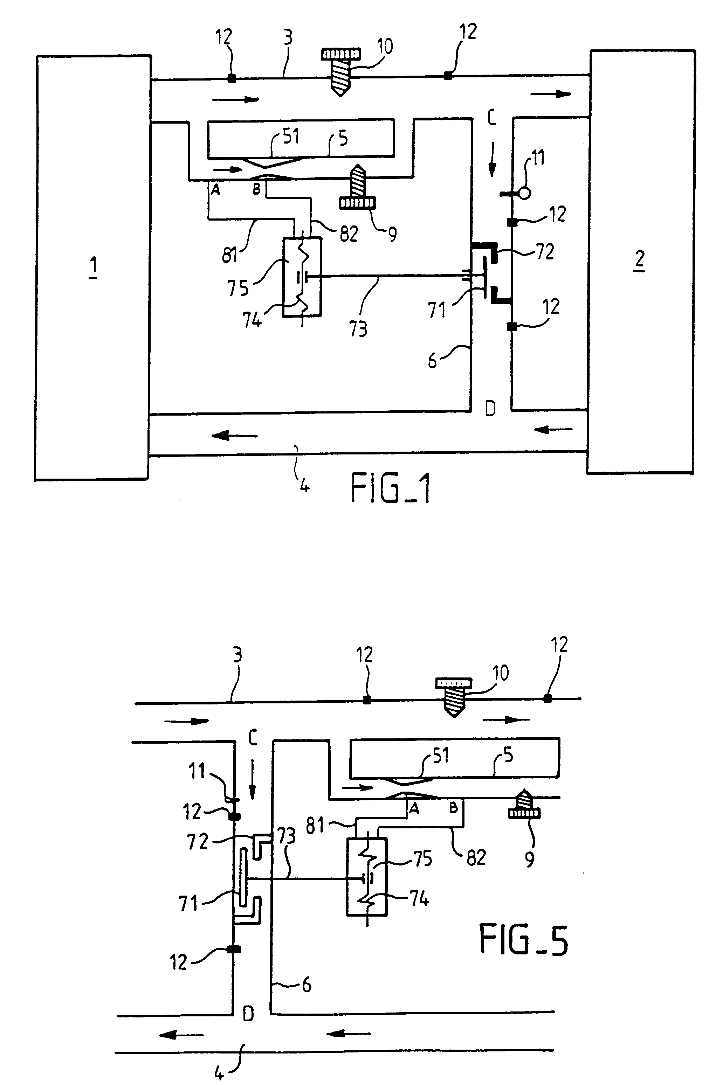

Le circuit représenté sur la figure 1 comporte, entre au moins un appareil pour amener la température d'un fluide à un niveau souhaité, ici une chaudière 1, et un groupe 2 de circuits de fluide comprenant chacun au moins un appareil d'échange calorifique avec l'extérieur, ici un radiateur, une conduite d'amenée 3 du fluide reliant la sortie de la chaudière à l'entrée du groupe de radiateurs et une conduite de retour 4 du fluide reliant la sortie du groupe de radiateurs à l'entrée de la chaudière. La plus grande partie du dispositif de régulation n'est pas intégrée à ces éléments mais vient s'ajouter à eux de telle sorte qu'il puisse être adapté à tout réseau de distribution de fluide de ce type existant, étant commercialisé par exemple sous forme d'ensemble prêt à monter (connu sous le nom de "kit").

Plus précisément, en dérivation sur la conduite d'amenée 3, est branché un conduit de mesure 5 dans lequel on provoque, entre deux de ses points A, B, une différence de pression destinée à créer la force représentative du débit amont, tandis qu'en dérivation sur le circuit d'utilisation, c'est-à-dire entre la conduite d'amenée 3 et la conduite de retour 4, est branché un conduit de régulation 6 dans lequel est prévu un débit variable et aux bornes C, D duquel existe une différence de pression qui n'est autre que la différence de pression aux bornes du groupe de circuits aval, qui est utilisée (à peu de choses près) pour créer la force représentative de cette différence de pression aux bornes de l'utilisation aval.

Comme on l'a vu, un ensemble de régulation muni d'un obturateur de commande de débit 71 est prévu dans le réseau. Le siège 72 de l'obturateur de commande 71 est inséré dans le conduit de régulation 6 de telle sorte que l'une des faces de cet obturateur 71 soit soumise à une pression pC en amont de l'utilisation tandis que l'autre face est isolée de la pression pC lorsque l'obturateur 71 repose contre son siège 72 (et se trouve à une pression pD en aval de l'utilisation). L'obturateur 71 est par ailleurs solidarisé, par exemple par une tige 73, à une membrane 74 cloisonnant une chambre 75 en deux compartiments et soumise à la différence de pression entre les points A et B (où les pressions sont respectivement pA et pB) par le fait que les deux compartiments de cette chambre sont reliés au conduit de mesure 5 respectivement par deux tubulures 81, 82 débouchant dans le conduit de mesure en ces points A et B ; la face de la membrane 74 qui est soumise à la force résultante représentative du débit amont et celle de l'obturateur 71 qui est soumise à la force résultante représentative de la différence de pression aux bornes de l'utilisation aval engendrent des forces qui sont tournées dans des directions opposées, de telle sorte que les forces exercées sur la membrane 74 et sur l'obturateur 71 sont convergentes.

Ainsi la force fM exercée sur la membrane de surface sM est fM = (pA - pB) sM,

et la force fO exercée directement sur l'obturateur de surface sO est pratiquement fO = (pC -pD) sO.

La force totale résultante sur l'obturateur et s'exerçant dans le sens de l'ouverture est donc

$$fO - fM = (pC - pD) sO - (pA - pB) sM.$$

La chute de pression dans le conduit de mesure 5 servant à appliquer la force désirée sur la membrane 74 est créée ici (mais non limitativement) par un Venturi 51 disposé dans la région de la tubulure aval 82 de ce conduit 5.

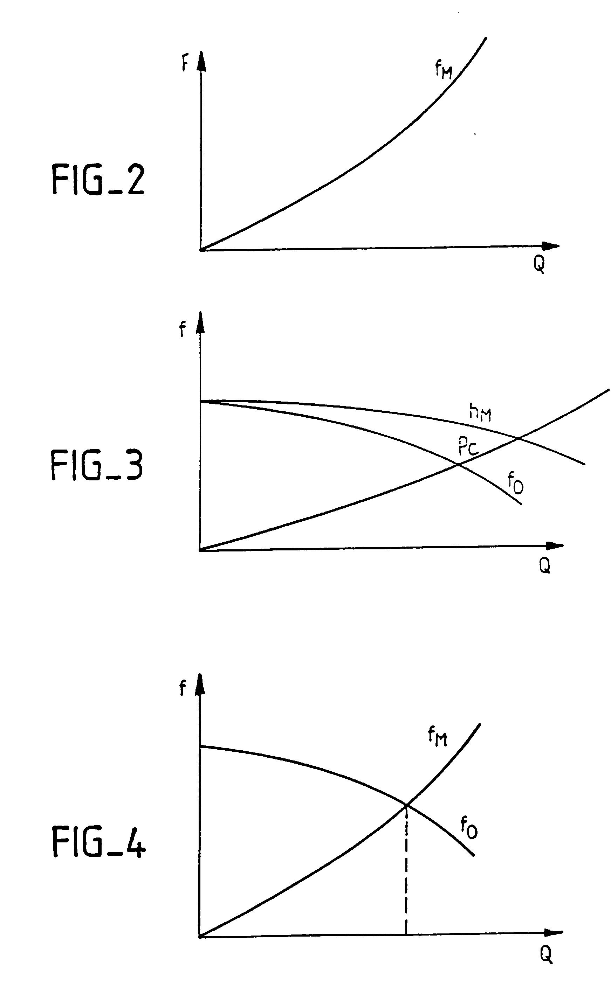

La force fM représentative du débit amont, à savoir le débit Q dans la conduite d'amenée 3, peut être valablement représentée, dans la gamme de fonctionnement, en fonction de ce débit Q, par une partie de parabole passant par l'origine (figure 2), car d'une part le débit dans le conduit de mesure 5 est proportionnel à celui dans la conduite d'amenée 3, et d'autre part la différence de pression pA - pB varie comme le carré du débit et ainsi il en est de même de la force fM.

Il faut noter que la membrane 74 peut être remplacée par tout autre dispositif permettant de représenter par une force susceptible d'être appliquée à l'obturateur 71, la différence de pression (pA - pB).

Comme représenté sur la figure 3, au contraire de la force fM, la force fO représentative de la différence de pression aux bornes de l'utilisation aval et qui est très peu différente de celle s'exerçant directement sur l'obturateur 71, en fonction du débit Q, a pour image une ligne incurvée dont la concavité est tournée vers le bas, étant égale à chaque instant, à un coefficient de surface près, à la différence entre la hauteur manométrique de la pompe (courbe hM) et les pertes de charge en amont du bipasse 6 (courbe pC).

En fonction du débit amont, l'obturateur va donc prendre pour position d'équilibre celle pour laquelle les deux forces fM et fO se compensent.

En tant que réglage initial, il suffit donc de faire en sorte que ces deux forces se compensent pour le débit Q nominal amont, l'obturateur 71 étant alors fermé, pour que l'obturateur assure ensuite en permanence, par une ouverture appropriée, la régulation désirée en fonction du degré de fermeture des organes de commande individuelle (robinets manuels ou automatiques) du groupe 2 de radiateurs. Ce point d'équilibre stable, illustré sur la figure 4, est le point d'intersection des deux courbes représentatives, de pentes de signes contraires, des deux forces fO et fM appliquées à l'obturateur. La compensation des forces pour le réglage initial est réalisée au moyen d'un organe de réglage 9 du débit dans le bipasse de mesure 5, disposé dans ce conduit 5.

Dans ces conditions, les deux régulations respectivement du débit et de la pression sont assurées de façon stable et précise par suite de l'absence de bande proportionnelle, et cela quelle que soit la courbe caractéristique débit/pression de la pompe (plate ou plongeante) et l'emplacement exact du dispositif de régulation dans le réseau.

Un unique organe de réglage 10 du débit dans la conduite d'amenée 3, quoique ne participant pas directement à l'équilibrage, permet d'assurer un débit suffisant dans le conduit de mesure 5.

De préférence, l'ensemble de régulation est équipé d'un indicateur d'état (mécanique ou autre) permettant de repérer notamment la position "fermé" de l'obturateur ; en variante, l'indicateur d'état peut être éventuellement remplacé par un contrôleur de débit 11 du type "tout ou rien" inséré dans le conduit de régulation 6.

Des prises de pression 12 pour permettre des mesures de débit au moyen d'un manomètre différentiel par exemple à microprocesseur peuvent être prévues sur la conduite d'amenée 3 approximativement au niveau des raccordements du conduit de mesure 5 à cette conduite d'amenée, et sur le conduit de dérivation 6 légèrement en amont et en aval du siège 72, ce qui, notamment, facilite le réglage initial qui sera succinctement décrit maintenant.

Le réglage du dispositif est très simple puisqu'il suffit d'un seul réglage initial pour le rendre opérationnel :

les organes de commande individuelle des émetteurs de chaleur étant ouverts au maximum, et l'ensemble de régulation 71-72-74-75 étant fermé, on agit sur l'organe de réglage 9 du débit dans le conduit de mesure 5 pour rendre égales et opposées la force fO exercée sur l'obturateur et la force fM exercée sur la membrane.

A l'inverse, le dispositif peut être réalisé conformément à la figure 5, sur laquelle les mêmes organes sont désignés par les mêmes repères numériques ; dans cette forme de réalisation, le dispositif est destiné à maintenir un débit aval constant et une différence de pression constante aux bornes du conduit de régulation 6 dans lequel le débit est variable. A cette fin, le conduit de mesure 5 est toujours branché en dérivation sur la conduite d'amenée 3, mais le conduit de régulation 6 relie la conduite d'amenée 3 à la conduite de retour 4 en amont de ce conduit de mesure 5 ; là encore, on provoque une différence de pression destinée à créer une force représentative du débit, aval cette fois, et une différence de pression constante aux bornes du bipasse de régulation 6 ; un ensemble de régulation muni d'un obturateur de commande 71 est prévu dans le circuit, le siège 72 de l'obturateur de commande étant inséré dans le conduit de régulation 6 de telle sorte que l'une des faces de l'obturateur de commande 71 soit soumise à une pression pC en sortie de la source tandis que l'autre face est isolée de la pression pC lorsque l'obturateur repose contre son siège 72, l'obturateur 71 étant par ailleurs solidarisé par une tige 73 à une membrane 74 cloisonnant une chambre 75 reliée au conduit de mesure 5 par deux tubulures 81, 82 débouchant dans le conduit de mesure en ces deux points A et B. La chute de pression dans le conduit de mesure 5 est toujours créée par un Venturi 51 mais disposé cette fois dans la région de la tubulure amont 81 de ce conduit 5 ; là encore, sont prévus un organe de réglage 9 dans le bipasse 5 et un unique organe de réglage 10 dans la conduite d'amenée 3, ainsi que, de préférence, un contrôleur de débit 11 dans le conduit de régulation 6 et des prises de pression 12 disposées comme précédemment.

Dans les deux formes de réalisation, plusieurs configurations sont possibles, par exemple monobloc ou en éléments séparés, et à également plusieurs voies, par exemple deux, trois ou quatre.

De plus le dispositif peut être piloté au niveau de l'organe de réglage 9 par un signal extérieur pour obtenir une adaptation automatique du débit en fonction des caractéristiques thermiques du système réglé ou des conditions de fonctionnement souhaitées (par exemple une programmation temporelle du chauffage).

On notera qu'avantageusement, le dispositif ne nécessite le montage, dans la conduite dans laquelle le débit doit être régulé, que d'un minimum d'organes additionnels, à savoir éventuellement un organe de réglage tout à fait conventionnel et des prises de pression, ce qui limite les interventions à effectuer sur celle-ci.

L'invention peut être appliquée avantageusement notamment à la régulation des circuits de chauffage à débit variable, des colonnes de distribution de chauffage, du débit amont des installations de chauffage, de la hauteur manométrique des pompes, des circuits de distribution d'eau chaude ou/et d'eau glacée par exemple en climatisation, du débit des tours de refroidissement, etc., en conférant à ces régulations une précision particulièrement grande, une indépendance vis-à-vis de la courbe caractéristique de la pompe et des pertes de pression de la partie amont de l'installation, et cela en conservant un fonctionnement d'une grande simplicité, une bonne stabilité du point d'équilibre, un réglage initial aisé, et en supprimant totalement les interférences hydrauliques des circuits en parallèle situés en aval de la conduite de régulation.

De plus, ce dispositif est parfaitement compatible avec les pompes à vitesse variable, la proportionalité hydraulique de l'aval étant conservée.

## Revendications

1. Réseau de distribution de fluide comprenant une source (1) de fluide, un groupe (2) de circuits de fluide comprenant chacun au moins un appareil convecteur de fluide dans lequel transite ledit fluide, une conduite (3) d'amenée de fluide reliant la sortie de la source et l'entrée du groupe de circuits, une conduite (4) de retour de fluide reliant la sortie du groupe de circuits et l'entrée de la source (1), et un dispositif de régulation, comprenant un conduit de régulation (6) à débit variable reliant la conduite d'amenée (3) et la conduite de retour (4), le conduit de régulation (6) renfermant un organe mobile de commande de débit (71) sensible à la différence de pression entre deux des points (C, D) dudit conduit de régulation, et l'organe de commande de débit (71) étant mobile entre une position de fermeture du conduit de régulation (6) et une position d'ouverture maximale de ce conduit de régulation, réseau de distribution de fluide caractérisé en ce que le dispositif de régulation comprend un conduit de mesure (5) de débit monté en dérivation sur la conduite d'amenée (3), en ce que l'organe mobile de commande de débit (71) du conduit de régulation (6) est solidaire d'un organe de mesure de débit (74) de la conduite d'amenée (3), en ce qu'au conduit de mesure (5) de débit est raccordé l'organe de mesure de débit (74) sensible à la différence de pression entre deux points (A, B) dudit conduit de mesure de débit, et l'organe de commande de débit (71) est mobile en fonction à la fois de la différence de pression entre lesdits deux points (A, B) du conduit de mesure (5) et de la différence de pression entre lesdits deux points (C, D) du conduit de régulation (6), de manière à maintenir constants le débit dans la partie de la conduite d'amenée sur laquelle le conduit de mesure est monté en dérivation, et la pression aux bornes du conduit de régulation.

**2.** Réseau de distribution de fluide selon la revendication 1, caractérisé en ce que l'organe (74) sensible à la différence de pression entre deux points (A, B) du conduit de mesure (5) est une membrane logée dans une chambre (75) et déterminant deux compartiments reliés au conduit de mesure.

**3.** Réseau de distribution de fluide selon la revendication 1, caractérisé en ce que l'organe (71) sensible à la pression entre deux points (C, D) du conduit de régulation (6) est un obturateur coopérant avec un siège (72) prévu dans le conduit de régulation.

**4.** Réseau de distribution de fluide selon la revendication 1, caractérisé en ce que le conduit de mesure (5) comporte un organe (11) créant une diminution de pression tel qu'un Venturi.

**5.** Réseau de distribution de fluide selon la revendication 1, caractérisé en ce que le conduit de mesure (5) est muni d'un organe (9) de réglage de débit.

**6.** Réseau de distribution de fluide selon la revendication 1, caractérisé en ce que la conduite d'amenée (3) est munie d'un organe (10) de réglage de débit.

**7.** Réseau de distribution de fluide selon la revendication 1, caractérisé en ce que le conduit de régulation (6) est en aval du conduit de mesure (5).

**8.** Réseau de distribution de fluide selon la revendication 1, caractérisé en ce que le conduit de régulation (6) est en amont du conduit de mesure (5).

**Patentansprüche**

**1.** Fluidverteilungsnetz, umfassend eine Fluidquelle (1), eine Gruppe (2) von Fluidkreisen mit jeweils wenigstens einer Fluidkonvektorvorrichtung, die das Fluid durchströmt, eine Fluidzufuhrleitung (3), welche den Ausgang der Quelle mit dem Eingang der Gruppe von Kreisen verbindet, eine Fluidrückführleitung (4), welche den Ausgang der Gruppe von Kreisen mit dem Eingang der Quelle (1) verbindet, sowie eine Reguliereinrichtung mit einer Regulierleitung (6) variablen Durchflusses, welche die Zufuhrleitung (3) mit der Rückführleitung (4) verbindet, wobei die Regulierleitung (6) ein bewegliches Durchflußsteuerelement (71) enthält, welches auf die Druckdifferenz zwischen zwei Punkten (C, D) der Regulierleitung anspricht, und wobei das Durchflußsteuerelement (71) zwischen einer Stellung, in der die Regulierleitung (6) geschlossen ist, und einer Stellung maximaler Öffnung dieser Regulierleitung beweglich ist, wobei das Fluidverteilungsnetz dadurch gekennzeichnet ist, daß die Reguliereinrichtung eine in Parallelschaltung von der Zufuhrleitung (3) abzweigende Durchflußmeßleitung (5) umfaßt, daß das bewegliche Durchflußsteuerelement (71) der Regulierleitung (6) mit einem Durchflußmeßelement (74) der Zufuhrleitung (3) verbunden ist, daß an die Durchflußmeßleitung (5) das Durchflußmeßelement (74) angeschlossen ist, das auf die Druckdifferenz zwischen zwei Punkten (A, B) der Durchflußmeßleitung anspricht, und daß das Durchflußsteuerelement (71) sowohl in Abhängigkeit von der Druckdifferenz zwischen den beiden Punkten (A, B) der Meßleitung (5) als auch der Druckdifferenz zwischen den beiden Punkten (C, D) der Regulierleitung (6) beweglich ist, um den Durchfluß in demjenigen Teil der Zufuhrleitung, zu dem die Meßleitung parallel geschaltet ist, und den Druck an den Anschlußpunkten der Regulierleitung konstant zu halten.

**2.** Fluidverteilungsnetz nach Anspruch 1, dadurch gekennzeichnet, daß das auf die Druckdifferenz zwischen zwei Punkten (A, B) der Meßleitung (5) ansprechende Element (74) eine Membran ist, welche in einer Kammer (75) aufgenommen ist und zwei Teilkammern festlegt, welche mit der Meßleitung verbunden sind.

**3.** Fluidverteilungsnetz nach Anspruch 1, dadurch gekennzeichnet, daß das auf den Druck zwischen zwei Punkten (C, D) der Regulierleitung (6) ansprechende Element (71) ein Verschluß ist, welcher mit einem in der Regulierleitung vorgesehenen Sitz (72) zusammenwirkt.

**4.** Fluidverteilungsnetz nach Anspruch 1, dadurch gekennzeichnet, daß die Meßleitung (5) ein Element (11) aufweist, welches eine Druckverringerung hervorruft, wie beispielsweise ein Venturi.

**5.** Fluidverteilungsnetz nach Anspruch 1, dadurch gekennzeichnet, daß die Meßleitung (5) mit einem Durchflußregelelement (9) versehen ist.

**6.** Fluidverteilungsnetz nach Anspruch 1, dadurch gekennzeichnet, daß die Zufuhrleitung (3) mit einem Durchflußregelelement (10) versehen ist.

**7.** Fluidverteilungsnetz nach Anspruch 1, dadurch gekennzeichnet, daß die Regulierleitung (6) stromabwärts der Meßleitung (5) liegt.

**8.** Fluidverteilungsnetz nach Anspruch 1, dadurch gekennzeichnet, daß die Regulierleitung (6) stromaufwärts der Meßleitung (5) liegt.

**Claims**

1.  Fluid distribution system including a source (1) of fluid, a set (2) of fluid circuits, each including at least one fluid convector apparatus through which the said fluid flows, a fluid delivery conduit (3) joining the outlet of the source and the inlet of the set of circuits, a fluid return conduit (4) joining the outlet of the set of circuits and the inlet of the source (1), and a regulating device including a variable flow-rate regulating conduit (6) joining the delivery conduit (3) and the return conduit (4), the regulating conduit (6) enclosing a movable member for controlling flow-rate (71) which is sensitive to the pressure difference between two of the points (C, D) in the said regulating conduit, and the member for controlling flow-rate (71) being movable between a position of closing of the regulating conduit (6) and a position of maximum opening of this regulating conduit, a fluid distribution system characterized in that the regulating device includes a conduit for measuring (5) flow-rate, fitted as a bypass on the delivery conduit (3), in that the movable member for controlling flow-rate (71) in the regulating conduit (6) is integrally joined to a member for measuring flow-rate (74) in the delivery conduit (3), in that the member for measuring flow-rate (74) which is sensitive to the pressure difference between two points (A, B) in the said conduit for measuring flow-rate is connected to the conduit for measuring (5) flow-rate, and the member for controlling flow-rate (71) is movable as a function both of the pressure difference between the said two points (A, B) in the measuring conduit (5) and of the pressure difference between the said two points (C, D) in the regulating conduit (6), so as to keep constant the flow-rate in the part of the delivery conduit to which the measuring conduit is fitted as a bypass, and the pressure at the terminals of the regulating conduit.

2.  Fluid distribution system according to Claim 1, characterized in that the member (74) which is sensitive to the pressure difference between two points (A, B) in the measuring conduit (5) is a membrane housed in a chamber (75) and determining two compartments joined to the measuring conduit.

3.  Fluid distribution system according to Claim 1, characterized in that the member (71) which is sensitive to the pressure between two points (C, D) of the regulating conduit (6) is a shutter interacting with a seat (72) provided in the regulating conduit.

4.  Fluid distribution system according to Claim 1, characterized in that the measuring conduit (5) comprises a member (11) creating a pressure reduction such as a venturi.

5.  Fluid distribution system according to Claim 1, characterized in that the measuring conduit (5) is provided with a member (9) for adjusting flow-rate.

6.  Fluid distribution system according to Claim 1, characterized in that the fluid delivery conduit (3) is provided with a member (10) for adjusting flow-rate.

7.  Fluid distribution system according to Claim 1, characterized in that the regulating conduit (6) is downstream of the measuring conduit (5).

8.  Fluid distribution system according to Claim 1, characterized in that the regulating conduit (6) is upstream of the measuring conduit (5).

FIG_1

FIG_5

FIG_2

FIG_3

FIG_4